Europäisches Patentamt

European Patent Office

Office européen des brevets

(11) Publication number: **0 096 676**

A2

## (12) EUROPEAN PATENT APPLICATION

(21) Application number: **83850158.3**

(22) Date of filing: **09.06.83**

(51) Int. Cl.³: **C 02 F 1/28**
**C 08 J 9/30**
**//(C08J9/30, C08L61/24)**

(30) Priority: **09.06.82 AU 84721/82**

(43) Date of publication of application:
**21.12.83 Bulletin 83/51**

(84) Designated Contracting States:
**AT BE CH DE FR GB IT LI NL SE**

(71) Applicant: Vallentin, Berglund Jan-Olof
Prästbergavägen 41
S-234 00 Lomma(SE)

(72) Inventor: Vallentin, Berglund Jan-Olof
Prästbergavägen 41
S-234 00 Lomma(SE)

(74) Representative: Ström, Tore et al,
c/o Ström & Gulliksson AB Rundelsgatan 14
S-211 36 Malmö(SE)

(54) Method and device in manufacturing foamed urea formaldehyde material to be used as a sorbent.

(57) The invention relates to a method of manufacturing a sorbent. A foam is produced by combining a urea formaldehyde resin with a foaming agent. The foam produced is allowed to expand into a covering and the hardening of the expanded foam is initiated in said covering. The foam when at least partially hardened is cut into pieces and the foam pieces are packed with preserved moisture content into hermetically sealed packages. The invention also relates to a sorbent manufactured by the method.

FIG. 1

EP 0 096 676 A2

Croydon Printing Company Ltd

METHOD AND DEVICE IN MANUFACTURING FOAMED UREA
FORMALDEHYDE MATERIAL TO BE USED AS A SORBENT

Background of the Invention

Field of the Invention

The invention relates to a method of manufacturing a sorbent to be used for removing oil from the water at sea or in lakes or for removing liquids of any kind that have been spilled on a floor, street or other surface.

Description of the Prior Art

It is previously known to use urea formaldehyde foams for absorbing and retaining oil or other liquids. The foam is then shredded into chips which are spread over the water or are laid out over the floor, street or other surface. A problem encountered in connection with a sorbent of this type is that the sorbent cannot be stored for an extended period since the chips will be compacted under the weight of the stored material with a reduction of the porosity of the foam as a consequence thereof. The ability of the material to absorb oil and other liquids may also be reduced during storing due to excessive entrainment of humidity into the material from the surrounding atmosphere. However, it is desired to store the sorbent at places where it should be available in case of oil spill, and it should be possible to store the material for a long time considering the fact that oil spill may not occur very frequently.

It is a primary purpose of the invention to provide a method of manufacturing a sorbent which is rapidly absorbing the liquid to be removed and then retains the liquid without "bleeding", which can be stored for extended periods without the properties thereof are impaired, which can be produced at reasonable costs, and which can be destructed biologically or by burning.

Summary of the invention

According to the invention there is provided a method of manufacturing a sorbent wherein a foam is produced by combining a urea formaldehyde resin with a foaming agent, the foam produced is allowed to expand into a covering, the hardening of the expanded foam is initiated in said covering, the hardened foam is cut into pieces, and the foam pieces are packed, with preserved moisture content, into hermetically sealed packages.

Preferably the foam material is sprayed with a solution of diammonium ortho phosphate before it is packed.

The material thus produced absorbs oil but does not absorb water or watery liquids from a floor, a street or other surface. When used for absorbing oil from water at sea or in lakes it can easily be pumped from the water surface by means of skimmer pumps.

In order to provide a sorbent that removes liquids of any kind including water said solution of diammonium ortho phosphate sprayed on the foam material should include a surface-active agent such as liquid soap.

The accompanying drawings, which are incorporated in and constitute a part of this specification, illustrate embodiments of the invention and, together with the description, serve to explain the principles of the invention.

Brief description of the drawings

Of the drawings:

FIG 1 is a diagram showing a plant for working the method in one embodiment thereof and

FIG 2 is a fragmentary view of the plant of FIG 1 for working a modified embodiment of the method of the invention.

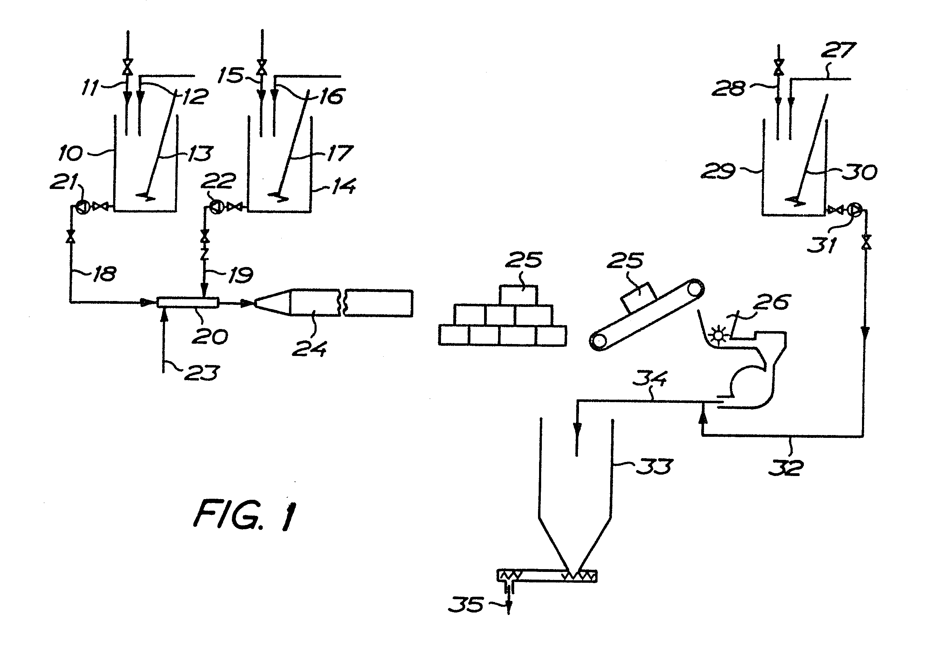

With reference to FIG 1 a vessel 10 is supplied with water through a conduit 11 and with a concentrated foaming agent through a conduit 12. A foaming agent particularly suitable for use with the invention is 514 W manufactured by BASF Aktiengesellschaft, D-6700 Ludwigshafen, Federal Republic of Germany. The proportions of water and foaming agent preferably are about 25:1 by volume. The mixture is stirred by means of a suitable stirring machine 13 and is left for about 10 hours.

Another vessel 14 is supplied with water through a conduit 15 and with a powder-form condensation product or urea formaldehyde through another conduit 16. A preferred product of this kind is BASOPOR 293 manufactured by BASF Aktiengesellschaft, D-6700 Ludwigshafen, Federal Republic of Germany. The proportions of water and condensation product preferably are 75 kg powder in 350 l water. The ingredients are thoroughly mixed and stirred by means of a suitable stirring machine 17 and is allowed to "mature" for about 10 hours.

From each vessel a conduit 18 and 19, respectively, extends to a foaming gun 20. High pressure pumps 21 are arranged in said conduits. The two mixtures are supplied to the foaming gun under a pressure of 20 kg/cm$^2$, and to the gun is also supplied pressurized air through a conduit 23 at a pressure of 8 kg/cm$^2$. The foamed material formed by the interreaction of the two mixtures supplied to the foaming gun expands into a plastic hose 24 of polyethylene having a diameter of about 60 cm, a wall thickness of about 0.003 mm and a length of about 30 m. The plastic hose preserves the humidity of the foamed material, and the material is temporarily stored in the hose for about 24 hours at room temperature. It has a volume weight of about 70 kg/m$^3$.

When stored in this way the material will set and will obtain a final hardness allowing a man to walk thereon without the material being crashed. The material having a moisture content of 40 to 45 % is cut into pieces 25 having a length of about 1 m and is then immediately or after storage for some weeks comminuted in a suitable mill 26 to a particulate material. In the mill, the material preferably is torn to irregular pieces of the order of 3 or 4 mm up to 20 mm by rotating members.

The product thus obtained has an excessive content of formaldehyde (about 0.1 % by weight). Therefore, a mixture of 16 % by weight of diammonium ortho phosphate supplied through a conduit 27 and water supplied through a conduit 28 is prepared in a vessel 29 and is stirred by means of a suitable stirring machine 30. The mixture thus prepared is supplied by a high pressure pump 31 through a conduit 32 to a nozzle from which the mixture is sprayed over the comminuted foamed material when supplied from the mill 26 to a silo 33 along a path 34. The mixture is sprayed over the material in an amount of about 1 l spray mixture per 100 l foam material. The material is discharged from the silo into plastic bags at 35 which are hermetically sealed. By the spray treatment the foam material reacts with the diammonium ortho phosphate and by such reaction the formaldehyde content is decreased. The reaction continues in the closed bag such that after 24 hours the formaldehyde content is about 0.04 % by weight.

The final product is effective as a sorbent for liquids of oil base type but cannot be used as a sorbent for liquids of water base type. In order to obtain a sorbent which can be used for removing liquids of any type 5 % by weight of a surface-active agent such as liquid soap is added to the mixture of diammonium ortho phosphate and water, said mixture thus containing 16 % by weight of diammonium ortho phosphate, 5 % by weight of a surface-active agent, and 79 % by weight of water.

As an alternative procedure the pieces 25 of foamed material may be loaded on a pallet and hermetically covered by means of a plastic shrink film, the pieces being sprayed with the mixture of diammonium ortho phosphate and water before packaging. The material then can be stored in these packages at the place where they should be available for use in an emergency situation wherein oil has to be removed from the water at the sea or in lakes. When the material is to be used it is comminuted at the same time as it is spread over the water surface. In this way the storage of the material over extended periods is facilitated. Moreover, the material manufactured by the method of the invention is most effective as an absorbent if contacted with the liquid to be removed immediately after the material having been comminuted.

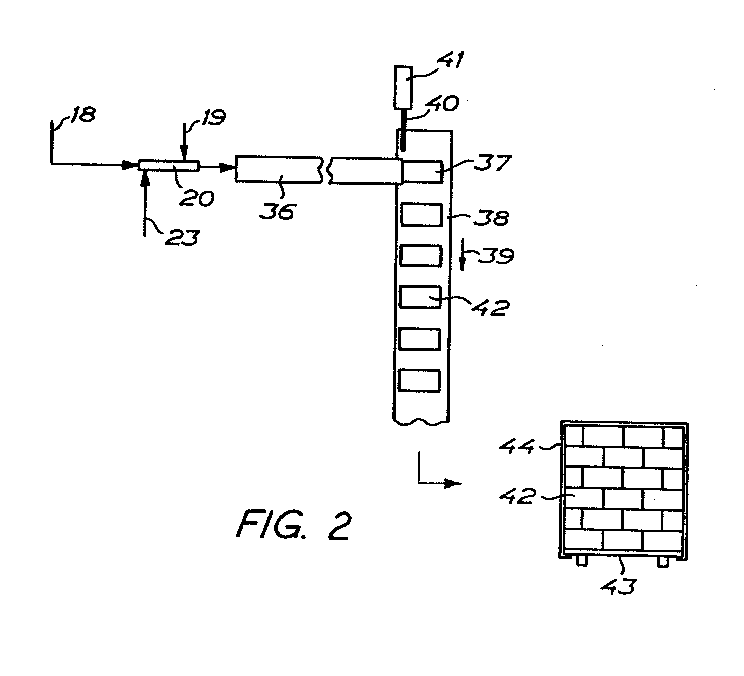

The alternative procedure is illustrated in FIG 2. The foaming gun 20 is supplied through conduits 18, 19 and 23 as previously described with reference to FIG 1 but in this case the foamed material is allowed to expand into a stainless steel tube 36 having a rectangular cross sectional form. In the tube 36 the foamed material will undergo an initial setting, and the material will issue from the tube at the end opposite to the foaming gun 20 as a continuous loaf 37 which has set only partially so that the block is more or less in the form of a jelly. The material issuing from the tube is received by an endless belt conveyor 38 which is intermittently advanced as indicated by an arrow 39. The loaf of foamed material is cut at regular intervals by a knife 40 reciprocated by a pneumatic ram 41, which is done in the intervals when the conveyor 38 is at rest. Thus, the loaf is cut into regular blocks 42 which are carried along on the conveyor 38 and during the transport the setting of the block is continued. After an hour the blocks have set to such an extent that they are sufficiently hard to be loaded in a stack on a pallet 43. The blocks are wrapped with a plastic cover 44 in order to hermetically enclose the blocks which will finally set in the hermetically sealed package. They are then stored in this way until they shall be used for absorption purposes

ó

as described above. As was also mentioned above, the blocks may be sprayed with the mixture of diammonium ortho phosphate and water before packaging.

CLAIMS

1. Method of manufacturing a sorbent wherein a foam is produced by combining a urea formaldehyde resin with a foaming agent, the foam produced is allowed to expand into a covering, the hardening of the expanded foam is initiated in said covering, the hardened foam is cut into pieces, and the foam pieces are packed, with preserved moisture content, into hermetically sealed packages.

2. Method as claimed in claim 1 wherein the foam is allowed to expand into a flexible plastic covering.

3. Method as claimed in claim 1 wherein the foam is allowed to expand into a rigid steel tube.

4. Method as claimed in claim 1 wherein the foam pieces are comminuted into smaller pieces to form a particulate material before being packed into containers or bags.

5. Method as claimed in claim 1 wherein the foam pieces are stacked on a pallet and are enclosed in a cover which is hermetically sealed.

6. Method as claimed in claim 1 wherein the foam material is sprayed with a solution of diammonium ortho phosphate before it is packed.

7. Method as claimed in claim 6 wherein the solution contains a surface-active agent.

8. A sorbent produced by the method as claimed in any of claims 1 to 7.

*FIG. 1*

FIG. 2